(19) Europäisches Patentamt
European Patent Office
Office européen des brevets

(11) **EP 2 657 538 B1**

(12) **EUROPEAN PATENT SPECIFICATION**

(45) Date of publication and mention
of the grant of the patent:
**05.02.2020 Bulletin 2020/06**

(51) Int Cl.:
*F15B 13/042* (2006.01)   *E02F 9/22* (2006.01)
*F15B 1/16* (2006.01)   *F15B 15/18* (2006.01)

(21) Application number: **11850467.9**

(22) Date of filing: **26.12.2011**

(86) International application number:
**PCT/KR2011/010095**

(87) International publication number:
**WO 2012/087081 (28.06.2012 Gazette 2012/26)**

(54) **OIL PRESSURE SYSTEM FOR A WHEEL LOADER**

ÖLDRUCKSYSTEM FÜR EINEN RADLADER

SYSTÈME DE PRESSION D'HUILE DESTINÉ À UNE CHARGEUSE À PNEUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010 KR 20100134608**

(43) Date of publication of application:
**30.10.2013 Bulletin 2013/44**

(73) Proprietor: **Doosan Infracore Co., Ltd.
Dong-gu
Incheon 401-020 (KR)**

(72) Inventor: **PARK, Moo Young
Incheon 400-013 (KR)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**EP-A2- 1 813 730     EP-A2- 1 939 363
JP-A- H09 217 384     JP-A- H09 217 384
JP-A- H11 181 842     JP-A- H11 181 842
JP-A- 2001 248 187     KR-A- 20090 053 523
US-A- 3 614 273**

# Description

## [Technical Field]

The present invention relates to an oil pressure system for a wheel loader, and more particularly to a wheel loader which includes an oil pressure system having a confluent circuit and reduces the occurrence of impact during loading work.

## [Background Art]

A construction machine, such as a wheel loader, performs so-called loading work, and frequently performs an operation of raising a boom connected with a bucket to a predetermined height during the work. For example, in order to transfer a bucket on which a product is loaded to a specific position, such as an upper side of a cargo box of a truck during loading work, the boom connected with the bucket is raised to a position higher than that of the cargo box of the truck.

When the bucket is raised to a position lower than the specific position, there exists a risk of collision between the bucket and the cargo box to damage the bucket. Further, in a case where the boom is raised as described above, the boom is generally controlled at a maximum speed for work efficiency.

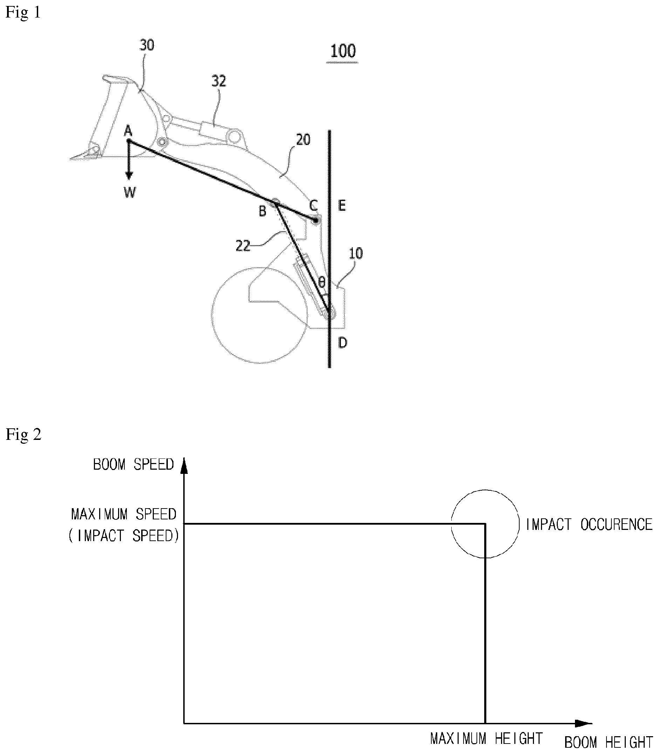

FIG. 1 is a schematic diagram of a wheel loader illustrated based on a front working device in the related art. According to FIG. 1, a wheel loader 100 includes a front working device consisting of a boom 20 having one end connected to a vehicle body frame 110 and driven by a boom cylinder 22, and a bucket 30 connected to a distal end of the boom 20 and driven by a bucket cylinder 32.

For example, force applied to the boom cylinder 22 may be expressed as Equation 1 below based on the illustration of FIG. 1.

$$\text{Equation}$$

$$P = W \times L1/L2 \cos\theta$$

Here, P means force applied to the boom cylinder 22, W means external force applied to a center point A of the bucket 30, L1 is a length of A - C, L2 is a length of B - C, and θ means an angle of B-D-E.

As described above, the force P applied to the boom cylinder 22 is a function related to an angle between the boom cylinder 22 (for example, B - D of FIG. 1) and a vertical wall (for example, D - E of FIG. 1) of the vehicle body frame 10 connected with the boom cylinder 22, and according to Equation 1, the force applied to the boom cylinder 22 when the boom 20 is raised is further increased.

Accordingly, in a case where the boom cylinder 22 is expanded for loading work, the boom cylinder 22 is generally expanded at a maximum speed to increase work efficiency.

Further, the wheel loader in the related art generally includes a pair of left and right oil pressure pumps in order to drive the front working device, and the pair of left and right oil pressure pumps may supply hydraulic oil to the front working device, such as the boom cylinder, through a so-called confluent circuit.

Further, a predetermined cutoff pressure is set in each oil pressure pump. As a result, the cutoff pressure limits, for example, a pressure range of the boom cylinder, that is, a maximum rising pressure range of the boom, and determines maximum force generable by each oil pressure pump.

For example, as illustrated in FIG. 2, during the loading work of the wheel loader, when a joystick for operating the boom is maximally operated, a raising speed of the boom may be maintained at a maximum speed until the boom approaches a maximum height. As represented in Equation 1, since the force (pressure, P) applied to the boom cylinder is in proportion to a raising height of the boom, a predetermined pressure value corresponding to the maximum height of the boom is set as each cutoff pressure in each oil pressure pump. Accordingly, the boom 20 may be raised to the maximum height of the boom at the maximum speed.

However, as illustrated in FIG. 2, the pair of left and right oil pressure pumps simultaneously approach the cutoff pressure in a state where the raising speed of the boom is largest, so that an increase movement of the boom is temporarily stopped, and the boom, which is raised at the maximum speed, is temporarily stopped, and thus impact may be generated and an impulse may be transferred to the bucket connected to the other end of the boom.

Since the loading work is generally to load a product on the bucket and load the product on a cargo box of a truck, and the like, when the impulse is transferred to the bucket, the product loaded on the bucket may be lost. Further, when the boom cylinder is abruptly halted during the expansion of the boom cylinder at the maximum speed, stress due to the impact may also be accumulated to a whole machine including the boom cylinder.

In order to solve the problem, technology of tracking a position (height) of the boom and controlling a rise of the boom by an electronic control method has been developed. However, for the technology, additional problems, such as complexity of a manufacturing process including a necessity to additionally include required electronic constituent elements, and an increase in cost, may be incurred, and further, a new problem, such as an occurrence of failure by the additionally included electronic constituent elements, may be incurred.

In the prior art, document JPH 1118 1842 which relates to the preamble of claim 1 shows an oil pressure system for a wheel loader including oil pressure pumps having different cut-off pressures, wherein the pressure system comprises a pair of oil pressure pumps configured to discharge hydraulic oil, a plurality of working devices including boom cylinders driven by a pressure of the hydraulic oil and a control valve means configured to control a flow of the hydraulic oil through a predetermined oil pressure line from the oil pressure pumps to the working devices, wherein the pair of oil pressure pumps are set to have cut-off pressures with different sizes. One pump has one particular cut of pressure in the range of 290 kg/cm$^2$ and another pump has a cut-off pressure of 275 kg/cm$^2$. Document US 3, 614, 273 discloses a mechanism for controlling the boom arms and bucket of a front end loader. In particular, this document discloses a hydraulic circuit for a wheel loader which has a pair of hydraulic pumps of different capacities supplying a pair of boom cylinders and a pair of bucket cylinders via a valve stack. The valve stack is equipped with a confluent circuit for making the hydraulic oils discharge from the pair of oil pressure pumps be confluent. Furthermore, the document JPH 0921 7384 shows a vitriolic circuit for a wheel loader that includes a selector which can stop operation of one of two pumps supplying pressurised hydraulic fluid to hydraulic actuators.

## [Disclosure]

## [Technical Problem]

The object of the present invention is to provide an oil pressure system for a wheel loader with an improved raising process of a boom, thereby, especially, decreasing impact generated when the boom approaches a maximum height during loading work. This object is solved by an oil pressure system according to claim 1. Further advantageous embodiments and improvements of the invention are listed in the dependent claims..

## [Technical Solution]

The invention as defined in claim 1 provides an oil pressure system for a wheel loader comprising a pair of oil pressure pumps configured to discharge hydraulic oil; a plurality of working devices including boom cylinders driven by a pressure of the hydraulic oil; and a control valve means configured to control a flow of the hydraulic oil through a predetermined oil pressure line from the pair of oil pressure pumps to the plurality of working devices, wherein the control valve means further includes a confluent circuit for making the hydraulic oils discharged from the pair of oil pressure pumps be confluent, wherein the hydraulic oils discharged from the pair of oil pressure pumps are supplied together to the boom cylinders through the confluent circuit when the boom is raised to a maximum height during loading work of the wheel loader, and wherein the pair of oil pressure pumps are set to have cutoff pressures having different sizes, so that impact generated when the boom approaches the maximum height is decreased, wherein the different cutoff pressures set in the pair of oil pressure pumps are a maximum cutoff pressure corresponding to a pressure when the boom approaches a maximum height, and a predetermined cutoff pressure corresponding to a pressure when the boom approaches a predetermined height close to the maximum height, respectively.

Another embodiment of the present invention concerns first cutting off an oil pressure pump supplying the hydraulic oil only to the plurality of working devices between the pair of oil pressure pumps.

Further, another embodiment provides that the predetermined height close to the maximum height is a height corresponding to approximately 90% of the maximum height.

## [Advantageous Effects]

According to the present invention, it is possible to provide the wheel loader with the improved boom raising process without including an additional electronic constituent element, and the like.

Further, according to the present invention, it is possible to decrease generated impact by decreasing a raising speed of the boom when the boom approaches a maximum height, for example, during loading work.

## [Description of Drawings]

FIG. 1 is a schematic diagram of a wheel loader illustrated based on a front working device.
FIG. 2 is a diagram schematically illustrating a relationship between a raising speed of a boom and a height of the boom in the related art including oil pressure pumps having the same cutoff pressure.
FIG. 3 is a block diagram schematically illustrating an oil pressure circuit of a wheel loader according to an exemplary embodiment of the present invention.
FIG. 4 is a diagram schematically illustrating a relationship between a raising speed of a boom and a height of the boom in the present invention including oil pressure pumps having different cutoff pressures.

## [Description of Main Reference Numerals of Drawings]

100: Wheel loader
110a, 110b: Oil pressure pump
111a, 111b : Pump regulator
120a, 120b: Cylinder
130: Control valve means
34132a, 132b: Main control valve
134: Confluent circuit
140: Oil pressure line

**[Detailed Description of Certain Inventive Embodiment]**

Hereinafter, an exemplary embodiment of the present invention will be described with reference to the accompanying drawings.

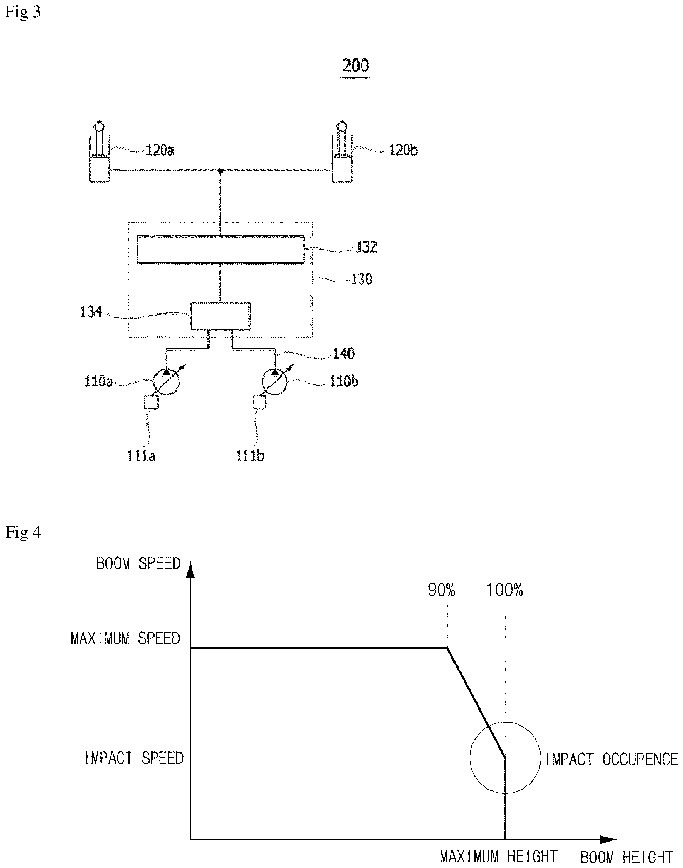

FIG. 3 is a block diagram schematically illustrating an oil pressure circuit of a wheel loader according to an exemplary embodiment of the present invention. FIG. 3 is an oil pressure circuit diagram schematically illustrated based on boom cylinders 120a and 120b, and an oil pressure line 140 supplying hydraulic oil to the boom cylinders 120a and 120b, and it may be noted that detailed elements, such as a pilot line, a variable flow adjustor, and a controller, are omitted.

Referring to FIG. 3, the wheel loader 100 applied to the present invention is characterized by connecting a pair of oil pressure pumps 110a and 110b to a control valve 132 of the boom cylinders 120a and 120b through a confluent circuit 134, and includes an oil pressure system in which hydraulic oil discharged from the pair of left and right oil pressure pumps 110a and 110b is also usable for raising the boom. In the present exemplary embodiment, a control valve means 130 for controlling a flow direction of the hydraulic oil is indicated with the control valve 132 and the confluent circuit 134, but it is obvious that the present invention is not limited thereto.

In addition, the pair of left and right oil pressure pumps 110a and 110b is characterized by having different cutoff pressures. For example, a pressure corresponding to a maximum height of the boom is set as a maximum cutoff pressure value in one oil pressure pump (for example, the oil pressure pump 110a) similar to the related art, but a pressure corresponding to a predetermined height close to the maximum height of the boom may be set as a predetermined cutoff pressure value in the other oil pressure pump (for example, the oil pressure pump 110b). For example, the predetermined height close to the maximum height of the boom may be a height corresponding to approximately 90% of the maximum height of the boom when it is assumed that the maximum height of the boom is 100%. As described above, the pressure demanded by the boom may be changed according to a product loaded on the bucket. In the present exemplary embodiment, a case where the boom is raised to the maximum height in a state where the products are completely loaded therein the bucket is described as an example, but a pressure demanded by the boom, that is, the cutoff pressure, may be adjusted in response to a type and work of the vehicle. The setting of the cutoff pressure of the oil pressure pump may be implemented by the cutoff means of various pumps. For example, the cutoff means may be formed of a relief valve unit adjusting relief pressure of a discharge line of the oil pressure pump, and may be formed of pump regulators 111a and 111b adjusting a discharge flow and a discharge pressure by adjusting a swash of each oil pressure pump. In the present exemplary embodiment, an example of adjusting a cutoff pressure by the cutoff means using the pump regulators 111a and 111b will be described. That is, when a discharge pressure of the oil pressure pump is equal to or larger than a predetermined pressure, the swash of the oil pressure pump is controlled by the pump regulators 111a and 111b in a state where the oil pressure pump does not substantially discharge a minimum flow of the hydraulic oil. To this end, a feedback of a discharge pressure of the oil pressure pump is necessary, which may be achieved by the publicly known technology of installing a separate pressure sensor, or branching a pressure signal line in the discharge line of the oil pressure pump and connecting the branched pressure signal lines to the pump regulators 111a and 111b, so that a detailed description thereof will be omitted herein.

In the meantime, the present invention further requires a sensor (not illustrated) capable of measuring a height of the boom, and the sensor may be configured in a form of an angle sensor installed in the boom cylinder to measure a stroke of the boom cylinder or measure a rotation angle of the boom.

As described above, the wheel loader according to the present invention is characterized by setting the different cutoff pressure values for the pair of left and right oil pressure pumps supplying the hydraulic oil through the confluent circuit. The different cutoff pressure values are set for the pair of left and right oil pressure pumps, respectively, so that it is possible to decrease impact generated when raising of the boom at the maximum speed and stopping during the loading work. For example, the present invention is characterized by setting a pressure corresponding to the maximum height of the boom as the maximum cutoff pressure value for one oil pressure pump similar to the related art, and setting a pressure corresponding to a height of approximately 90% of the maximum height of the boom as the predetermined cutoff pressure value for the other oil pressure pump according to the characteristic of the present invention. In the above description, the prevention of the impact by setting the cutoff pressure has been described as an example. However, when the oil pressure pump 110a is cutoff regardless of the cutoff pressure according to the height of the boom, the similar effect may be induced even in a case where a weight of the products is small, as well as a case where the boom is raised at the maximum pressure. That is, the effect of the boom impact prevention of the present invention may also be achieved by restricting, that is, cutting off, the discharge of the hydraulic oil of one oil pressure pump between the pair of oil pressure pumps in response to the height of the boom.

In the oil pressure system in which the pair of oil pressure pumps 110a and 110b are confluent during typical driving of the boom, any one pump supplies the entire hydraulic oil to a front working device including the boom and the bucket, and the other pump divides the hydraulic oil and supplies the hydraulic oil to the aforementioned front working device and an additional device, for example, a steering device. In this case, the setting of a low cutoff pressure according to the exemplary embodiment of the present invention may be applied to the oil pressure pump 110a supplying the entire hydraulic oil to the front working device. The reason is that a case where the oil pressure pump 110 dividing and supplying the hydraulic oil to another additional device is set to have a low cutoff pressure may have a considerable effect in relieving the impact of the boom promoted in the present invention, but may incur other problems due to a shortage of a pressure or a flow of the hydraulic oil supplied to another additional device. FIG. 4 is a diagram schematically illustrating a relationship between a raising speed and a height of the boom when the pair of oil pressure pumps having the different cutoff pressure values according to the characteristic of the present invention is used. The characteristic of the present invention will be described below with reference to FIG. 4.

As illustrated in FIG. 4, the loading work in the wheel loader of the present invention may be performed with a maximum pressure by the hydraulic oil provided from the pair of oil pressure pumps until the boom approaches approximately 90% of the maximum height similar to the related art, and when the maximum flow of hydraulic oil is supplied in a state where the pressure of the hydraulic oil is at the maximum as described above, the boom may be raised at the maximum speed. The raising of the boom by using the maximum pressure of the hydraulic oil is performed in a case where the boom is raised to a maximum rising position in a state where a weight of products loaded on the bucket is close to an allowed weight of the wheel loader, or a case where a driver maximally operates the joystick in order to maximally increase the raising speed of the boom.

As described above, when the boom approaches approximately 90% of the maximum height, one oil pressure pump approaches the cutoff pressure, so that the supply of the hydraulic oil from the corresponding oil pressure pump is stopped, and thus the boom is raised only with the pressure of the hydraulic oil discharged from the other remaining oil pressure pump from the height corresponding to approximately 90% of the maximum height to the maximum height (100% height).

Accordingly, as illustrated in FIG. 4, the raising speed of the boom is gradually decreased, and the raising speed of the boom is maintained at a speed equal to or lower than approximately a half of that of the related art when the boom approaches the maximum height. Accordingly, it can be recognized that the boom approaches the maximum height and then stopped at a speed equal to or lower than a half of that of the related art, so that less impact is generated compared to the related art.

Accordingly, through a simple characteristic of setting the different cutoff pressures for the pair of left and right oil pressure pumps, it is possible to considerably decrease impact applied to the boom, the bucket, and the like at the maximum height of the boom during the loading work, and thus it is possible to considerably decrease a risk of losing a product due to impact, and also considerably decrease the amount of stress accumulated in each constituent element and the like.

Further, according to the characteristic of the present invention, since an additional constituent element is not required, it is possible to achieve the object of decreasing the impulse during the loading work to be achieved in the present invention without causing an increase in additional costs and inconvenience, such as an increase in complexity of a manufacturing process.

**[Industrial Applicability]**

The present invention may be used in a wheel loader for decreasing impact generable during loading work.

**Claims**

1. An oil pressure system for a wheel loader, comprising:

   a) a pair of oil pressure pumps (110a, 110b) configured to discharge hydraulic oil;
   b) a plurality of working devices including boom cylinders (120a, 120b) driven by a pressure of the hydraulic oil; and
   c) a control valve means (130) configured to control a flow of the hydraulic oil through a predetermined oil pressure line from the pair of oil pressure pumps to the plurality of working devices,

   **characterized in that**

   d) the control valve means (130) further includes a confluent circuit (134) for making the hydraulic oils discharged from the pair of oil pressure pumps be confluent, wherein
   e) the hydraulic oils discharged from the pair of oil pressure pumps (110a, 110b) are supplied together to the boom cylinders (120a, 120b) through the confluent circuit (134) when the boom is raised to a maximum height during loading work of the wheel loader, and wherein
   f) the pair of oil pressure pumps (110a, 110b) are set to have cutoff pressures having different sizes, so that impact generated when the boom approaches the maximum g) the different cutoff pressures set in the pair of oil pressure pumps (110a, 110b) are a maximum cutoff pressure corresponding to a pressure when the boom approaches a maximum height, and a predetermined cutoff pressure corresponding to a pressure when the boom approaches a predetermined height close to the maximum height, respectively.

2. The oil pressure system of claim 1, wherein an oil pressure pump supplying the hydraulic oil only to the plurality of working devices between the pair of oil pressure pumps (110a, 110b) is first cut off.

3. The oil pressure system of claim 1, wherein the predetermined height close to the maximum height is a height corresponding to approximately 90% of the maximum height.

## Patentansprüche

1. Öldrucksystem für einen Radlader, umfassend:

    a) ein Paar Öldruckpumpen (110a, 110b), die dazu gestaltet sind, Hydrauliköl abzuführen;
    b) mehrere Arbeitsvorrichtungen, die Auslegerzylinder (120a, 120b) beinhalten, die durch einen Druck des Hydrauliköls angetrieben werden; und
    c) ein Steuerventilmittel (130), das dazu gestaltet ist, einen Fluss des Hydrauliköls durch eine vorbestimmte Öldruckleitung von dem Paar Öldruckpumpen zu den mehreren Arbeitsvorrichtungen zu steuern, **dadurch gekennzeichnet, dass**,
    d) das Steuerventilmittel (130) ferner einen konfluenten Kreislauf (134) beinhaltet, um die von dem Paar Öldruckpumpen abgeführten Hydrauliköle zusammenlaufen zu lassen, wobei
    e) die von dem Paar Öldruckpumpen (110a, 110b) abgeführten Hydrauliköle zusammen durch den konfluenten Kreislauf (134) den Auslegerzylindern (120a, 120b) zugeführt werden, wenn der Ausleger während der Ladearbeit des Radladers auf eine maximale Höhe angehoben ist, und wobei
    f) das Paar Öldruckpumpen (110a, 110b) so eingestellt ist, dass sie Abschaltdrücke unterschiedlicher Größen aufweisen, sodass eine Wirkung, die erzeugt wird, wenn sich der Ausleger der maximalen Höhe nähert, verringert wird, wobei
    g) die unterschiedlichen, in dem Paar Öldruckpumpen (110a, 110b) eingestellten Abschaltdrücke ein maximaler Abschaltdruck, der einem Druck entspricht, wenn sich der Ausleger einer maximalen Höhe nähert, bzw. ein vorbestimmter Abschaltdruck, der einem Druck entspricht, wenn sich der Ausleger einer vorbestimmten Höhe nahe der maximalen Höhe nähert, sind.

2. Öldrucksystem nach Anspruch 1, wobei eine Öldruckpumpe, die das Hydrauliköl nur den mehreren Arbeitsvorrichtungen zwischen dem Paar Öldruckpumpen (110a, 110b) zuführt, als erste abgeschaltet wird.

3. Öldrucksystem nach Anspruch 1, wobei die vorbestimmte Höhe nahe der maximalen Höhe eine Höhe ist, die etwa 90 % der maximalen Höhe entspricht.

## Revendications

1. Système de pression d'huile destiné à une chargeuse à pneus, comprenant :

    a) une paire de pompes de pression d'huile (110a, 110b) conçues pour décharger l'huile hydraulique ;
    b) une pluralité de dispositifs de travail comprenant des vérins de flèche (120a, 120b) entraînés par une pression de l'huile hydraulique ; et
    c) un moyen de soupape de commande (130) conçu pour commander un flux de l'huile hydraulique à travers une conduite de pression d'huile prédéfinie de la paire de pompes de pression d'huile à la pluralité de dispositifs de travail, **caractérisé en ce que**
    d) le moyen de soupape de commande (130) comprend en outre un circuit confluent (134) pour rendre confluentes les huiles hydrauliques déchargées de la paire de pompes de pression d'huile,
    e) les huiles hydrauliques déchargées de la paire de pompes de pression d'huile (110a, 110b) sont fournies ensemble aux vérins de flèche (120a, 120b) à travers le circuit confluent (134) lorsque la flèche est levée à une hauteur maximale pendant le travail de charge de la chargeuse à pneus, et
    f) la paire de pompes de pression d'huile (110a, 110b) sont réglées pour avoir des pressions de coupure ayant des valeurs différentes, de sorte que l'impact généré lorsque la flèche approche de la hauteur maximale soit diminué,
    g) les différentes pressions de coupure réglées dans la paire de pompes de pression d'huile (110a, 110b) sont une pression de coupure maximale correspondant à une pression lorsque la flèche approche d'une hauteur maximale, et une pression de coupure prédéfinie correspondant à une pression lorsque la flèche approche d'une hauteur prédéfinie proche de la hauteur maximale, respectivement.

2. Système de pression d'huile selon la revendication 1, une pompe de pression d'huile fournissant l'huile hydraulique uniquement à la pluralité de dispositifs de travail entre la paire de pompes de pression d'huile (110a, 110b) étant d'abord arrêtée.

3. Système de pression d'huile selon la revendication 1, la hauteur prédéfinie proche de la hauteur maximale étant une hauteur correspondant à environ 90

**EP 2 657 538 B1**

% de la hauteur maximale.

Fig 1

Fig 2

Fig 3

200

Fig 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3614273 A

- JP H09217384 B